# EUROPÄISCHE PATENTANMELDUNG

(11) **EP 0 595 789 A1**
(43) Veröffentlichungstag der Anmeldung: **04.05.1994**
(21) Anmeldenummer: 94100964.9
(22) Anmeldetag: 26.02.1992
(51) Int. Cl.: C02F 1/72

(54) **Verfahren zum Entgiften cyanidischer wässriger Lösungen**

(30) Priorität: 27.03.1991 DE 4110055
(62) Teilanmeldung aus: 92103208.2
(71) Anmelder: Degussa Aktiengesellschaft, D-60311 Frankfurt (DE)
(72) Erfinder: Steiner, Norbert, Dr., Upper Saddle River,N.J. 07401 (US); Gos, Stephan, D-63452 Hanau (DE); Ladwig, Frank, D-63584 Gründau (DE); Diehl, Manfred, Dr., D-60389 Frankfurt (DE)

(57) **Zusammenfassung**

Die Erfindung betrifft ein Verfahren zum Entgiften von Cyanide und/oder Cyanokomplexe enthaltenden wäßrigen Lösungen in Gegenwart von Schwermetallen aus der Reihe Mn, Co, Ni, Cu, Cd, Zn, insbesondere Cu, durch oxidative Behandlung der Lösungen mit einer Peroxidverbindung bei pH-Werten von 8 bis 12, wobei als Peroxidverbindung ein Alkalipercarbonat verwendet wird. Das Alkalipercarbonat, vorzugsweise 2 Na₂CO₃ · 3 H₂O₂, wird bevorzugt in fester Form der zu entgiftenden Lösungen zugesetzt.

Das erfindungsgemäße Verfahren ist bezüglich des Einsatzes an Peroxidverbindung wesentlich effektiver als das vorbekannte Verfahren unter Verwendung von Wasserstoffperoxid.

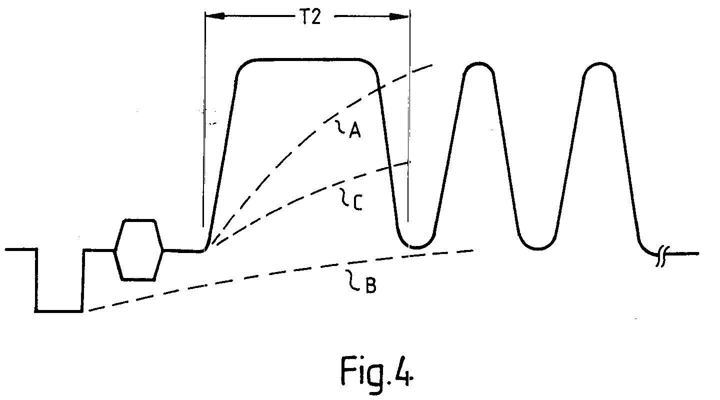

## Beschreibung

Die Erfindung richtet sich auf ein Verfahren zum Entgiften von Cyanide und/oder Cyanokomplexe enthaltenden wäßrigen Lösungen in Gegenwart von Schwermetallen aus der Reihe Mn, Co, Ni, (Cu, Cd, Zn, insbesondere Kupfer, durch oxidative Behandlung derselben mit einer Peroxidverbindung.

Abwässer, welche Cyanide und/oder Cyanhydrine enthalten, lassen sich nach dem Verfahren der US-PS 3,970,554 durch Zusatz von Peroxidverbindungen bei Temperaturen von 10 bis 80 °C und pH-Werten von 6 bis 12 in Gegenwart von Jodidionen als Katalysator und ggf. Silberionen entgiften. Als bevorzugte Peroxidverbindung wird Wasserstoffperoxid herausgestellt; in gleicher Weise sollen Alkali- und Erdalkaliperoxide verwendbar sein. Zwar werden in diesem Dokument auch Perborate, Percarbonate und Persulfate als wirkungsvoll bezeichnet, der Vergleich des Tests 10 (Beispiel 2) mit dem Test 25 (Beispiel 7) läßt aber die Überlegenheit von Wasserstoffperoxid gegenüber Natriumperborat erkennen, weil im Falle des Perborats die dreifache Reaktionszeit erforderlich war, um den Cyanidgehalt unter 0, 1 mg/l abzusenken.

In der US-PS 3,970,554 wird ausgeführt, daß die Entgiftung von Cyaniden mit Wasserstoffperoxid in Abwesenheit von Katalysatoren unbefriedigend verläuft. Andererseits haben die bekannten Kupferkatalysatoren den Nachteil, daß gerade dann, wenn die letzte Menge Cyanid zu zerstören ist, auch die Zersetzung von Wasserstoffperoxid stark katalysiert wird. Oftmals wird somit kein ausreichender Entgiftungsgrad erzielt.

Im Verlauf der Reaktion bildet sich aus den Kupfercyanokomplexen durch stufenweisen Abbau das schwerlösliche CuCN oder - wenn dieses mit überschüssigem H₂O₂ vollständig abgebaut wird - der Kupfertetramminkomplex, der die Ausfällung des Kupfers als Hydroxid verhindert. Somit kann das behandelte Abwasser auch eine unerwünscht hohe Restmenge an Cu-Ionen enthalten.

Die aufgezeigten Probleme gewinnen insbesondere dann an Bedeutung, wenn dem zu entgiftenden Abwasser zum Zwecke einer ausreichend raschen Entgiftung eine große Menge Kupfer zugesetzt wird, woraus zunächst Kupfercyanokomplexe gebildet werden, oder das Abwasser bereits herkunftsbedingt eine größere Menge Kupfercyanokomplexe und ggf. andere Schwermetallcyanokomplexe, wie solche von Cd, Ni, Co, Zn, enthält. Das Verfahren gemäß der US-PS 3,970,554 legt nahe, solche Abwässer zu engiften, welche frei von Schwermetallcyaniden sind und/oder keinen Zusatz von Kupfersalzen als Katalysator erfordern; lediglich ein Zusatz von maximal 1 mg Ag⁺/l als Katalysator und damit die Anwesenheit der äquivalenten Menge des Ag(CN)₂⁻ - Komplexes wurde als zweckmäßig erachtet.

Feststofffreie oder feststoffhaltige Abwässer, etwa Erzaufschlämmungen, wie sie in der Minentechnik, etwa der Goldlaugung mittels Cyanid, sowie in der Galvanotechnik anfallen, enthalten in bedeutendem Umfang Schwermetallcyanokomplexe, insbesondere Kupfercyanokomplexe. Solche Abwässer lassen sich mit Wasserstoffperoxid nicht befriedigend entgiften und/oder das erforderliche Molverhältnis H₂O₂ zu Cyanid ist so hoch, daß die Wirtschaftlichkeit völlig infrage gestellt wird.

Die Oxidation des Cyanids zu Cyanat mit sich daran anschließender Hydrolyse des Cyanats kann gemäß US-PS 3,510,424 anstelle mit Wasserstoffperoxid auch mit Peroxosäuren oder Salzen davon bewerkstelligt werden. Die Oxidationsreaktion mit beispielsweise Peroxomonosulfat verläuft rascher als mit H₂O₂, kann aber durch Katalysatoren, wie Kupfersalze, weiter beschleunigt werden. Nach diesem Verfahren lassen sich der Cyanidgehalt von Schwermetallcyanokomplexe enthaltenden wäßrigen Lösungen meist ausreichend absenken. Die Wirtschaftlichkeit des Verfahrens unter Verwendung von Peroxosäuren wird aber durch deren gegenüber Wasserstoffperoxid viel höheren Marktpreis eingeschränkt.

Anstelle marktüblicher Peroxosulfate lassen sich gemäß der EP-A 0 355 417 auch spezielle Oxidationsgemische aus Wasserstoffperoxid und Schwefelsäure zur Cyanidentgiftung verwenden, wodurch die Einsatzmenge an H₂O₂ vermindert werden konnte. Auch Oxidationsgemische aus Wasserstoffperoxid und Phosphorsäure wurden vorgeschlagen - EP-A 0 398 234. Die Verwendung von Mineralsäure in Bereichen, wo cyanidische Abwässer anfallen oder entgiftet werden, ist aber mit dem Risiko verbunden, daß im Falle einer Fehlsteuerung in die cyanidische Lösung Mineralsäure gelangen kann und damit Cyanwasserstoff entweicht und die Arbeitssicherheit beeinträchtigt wird. Bei der Herstellung der genannten Oxidationsgemische bedarf es zudem einer Lösestation sowie gegebenenfalls einer Vorrichtung zum Kühlen.

Schließlich konnte auch gemäß EP-A 0 355 418 bei der Cyanidentgiftung die Einsatzmenge an Wasserstoffperoxid reduziert werden, jedoch war hierzu die Mitverwendung eines speziellen Fällungsmittels für Schwermetalle, nämlich Trimercapto-s-triazin, erforderlich.

Aus der Praxis ist bekannt, daß die Entgiftung cyanidischer Abwässer mit Peroxidverbindungen insbesondere dann unbefriedigend verläuft und/oder zu einem extrem hohen Verbrauch an Peroxidverbindungen führt, wenn das Abwasser manganhaltig ist.

Wie zuvor dargelegt wurde, sind zwar diverse Verfahren zur Entgiftung von Cyanide und/oder Cyanokomplexe toxischer Schwermetalle enthaltenden wäßrigen Lösungen bekannt, es besteht aber weiterhin ein Interesse, die Möglichkeiten zur Entgiftung unter Verwendung von Peroxidverbindungen zu erweitern, um unterschiedlichen Gegebenheiten in der Praxis Rechnung tragen zu können. Ziele einer gewünschten Verbesserung zur Steigerung der Effektivität und/oder Wirtschaftlichkeit des Verfahrens sind: Erhöhung des Entgiftungsgrades bezüglich des Rest-Cyanid- und Rest-Schwermetallgehalts; Verkürzung der Reaktionsdauer und Erniedrigung der Einsatzmenge Peroxidverbindung im Vergleich zur Verwendung von H₂O₂ in Gegenwart üblicher Katalysatoren; Verwendung ausreichend verfügbarer Peroxidverbindungen, welche pro Peroxidäquivalent preiswerter sind als marktübliche Peroxosulfate. Schließlich richtet sich eine weitere Aufgabe der Erfindung darauf, das gattungsgemäße Verfahren so zu gestalten, daß auch manganhaltige, Cyanide und/oder Cyanokomplexe enthaltende wäßrige Lösungen in Gegenwart von Schwermetallen aus der Reihe Cu, Cd, Ni, Co, und Zn, insbesondere Cu, sicher und mit geringerer Einsatzmenge an Peroxidverbindungen entgiftet werden können, als dies bisher möglich war.

Gefunden wurde ein Verfahren zum Entgiften von Cyanide und/oder Cyanokomplexe enthaltenden wäßrigen Lösungen, welche auch Feststoffe enthalten können, in Gegenwart von Verbindungen von Schwermetallen aus der Reihe Mn, Co, Ni, Cu, Cd, Zn, insbesondere Cu, durch oxidative Behandlung der Lösungen mit einer Peroxidverbindung, wobei pro Äquivalent Cyanid mindestens ein Äquivalent Peroxidverbindung eingesetzt wird, bei pH-Werten von 8 bis 12 und Temperaturen zwischen dem Gefrierpunkt der Lösungen bis 80 °C, das dadurch gekennzeichnet ist, daß man als Peroxidverbindung ein Alkalipercarbonat verwendet, wobei dieses in fester oder in Wasser gelöster oder suspendierter Form der zu entgiftenden Lösung zugesetzt wird.

Unter den Cyanokomplexen sind insbesondere solche der toxischen Schwermetalle Kupfer, Zink, Cadmium, Nickel und Kobalt zu verstehen. Vorzugsweise enthalten die zu entgiftenden Lösungen Kupfer, das entweder herkunftsbedingt bereits in der Lösung enthalten ist -in Form von Kupfercyanokomplexen - oder als wirksamer Katalysator in Form einer Cu-Verbindung, insbesondere eines löslichen Cu(II)-Salzes, der zu entgiftenden Lösung zugesetzt worden ist. Die Konzentration an in der zu entgiftenden Lösung bereits vorhandenen und zugesetzten Schwermetallen beträgt vor der Zugabe der Peroxidverbindung üblicherweise mehr als 1 mg/l.

Mit dem erfindungsgemäßen Verfahren unter Verwendung von zugesetztem Alkalipercarbonat gelingt es, cyanidische Lösungen in Gegenwart von Kupfer in wirtschaftlicher Weise bis zu einem Restgehalt unter 1 mg CN/l und unter 1 mg Cu/l zu entgiften. Dies trifft überraschenderweise auch für solche Lösungen zu, welche manganhaltig sind. Nicht vorhersehbar war ferner, daß im erfindungsgemäßen Verfahren der Nickelgehalt nickelhaltiger cyanidischer Lösungen weiter abgesenkt werden konnte als unter Verwendung von H₂O₂ oder Peroxomonosulfat.

Im erfindungsgemäßen Verfahren wird als Peroxidverbindung ein Alkalipercarbonat, und hier insbesondere Natriumpercarbonat der Formel Na₂CO₃ · 1,5 H₂O₂, eingesetzt. Das Percarbonat wird besonders bevorzugt als Feststoff der zu entgiftenden Lösung zugesetzt, da hier deutlich bessere Entgiftungsergebnisse erzielt werden als bei der Zugabe einer Percarbonatlösung.

Bei den zu entgiftenden Lösungen, welche auch Feststoffe enthalten können, handelt es sich im allgemeinen um Abwässer unterschiedlichster Provenienz, etwa der Minenindustrie, chemischen Industrie, galvanotechnischen Betrieben sowie Waschwässern von Verbrennungsanlagen oder Hochofenprozessen. Aus dem Bereich der Minenindustrie sei beispielhaft auf Abwässer und Abgänge (Erzaufschlämmungen) aus Prozessen zur Gewinnung von Gold durch Cyanidlaugung hingewiesen; derartige Abwässer und Abgänge enthalten häufig in erheblichem Umfang Kupfercyanokomplexe, daneben zum Teil auch Nickel und andere Schwermetalle. Bei der Metallisierung mittels üblicher galvanotechnischer Prozesse fallen vielfach cyanidische Abwässer mit einem mehr oder weniger breiten Spektrum an Cyanokomplexe bildenden Schwermetallen aus der Reihe Mn, Co, Ni, Cu, Zn, Cd an; besonders häufig enthalten diese Abwässer Kupfer, ferner Nickel und teilweise Mangan.

Bei der erfindungsgemäßen oxidativen Behandlung der zu entgiftenden Lösungen wird freies und als Cyanokomplex gebundenes Cyanid zunächst zu Cyanat oxidiert, letzteres zu NH₄⁺ und HCO₃ ⁻ hydrolysiert. Bekannt ist, daß die Oxidation des Cyanids durch Schwermetallkationen, wie insbesondere Cu(II), Co(II). Ni(II), katalytisch wirksam beschleunigt wird. In der Praxis wird insbesondere von der Zugabe von Cu(II) als Katalysator oft Gebrauch gemacht, um den geforderten Restcyanidgehalt in akzeptabler Reaktionszeit zu erzielen.

Der überstöchiometrische Verbrauch an Alkalipercarbonat resultiert einmal aus der Zersetzung desselben, welche durch die gleichen Metalle katalysiert wird, welche auch die Cyanidoxidation katalysieren. Zudem ist auch zu berücksichtigen, daß Cyanat neben der Hydrolyse auch der Peroxolyse unterliegt (OCN⁻ + 2H₂O₂ --- NH₃ + HCO₃⁻ + O₂). Erfindungsgemäß werden pro Äquivalent Cyanid mindestens 2 Äquivalente Peroxidverbindung, im Falle von Natriumpercarbonat der Formel Na₂CO₃ · 1,5 H₂O₂ also mindestens 4/3 Mol verwendet. Vorzugsweise werden pro Cyanidgruppe 2 bis 4 Äquivalente Peroxidverbindung eingesetzt. Insbesondere zur Entgiftung komplex zusammengesetzter galvanischer Abwässer kann es erforderlich sein, den Einsatz an Peroxidverbindung weiter zu erhöhen.

Die Entgiftung kann oberhalb des Gefrierpunktes der Lösung bis 80 °C durchgeführt werden. Höhere Temperaturen sind zwar möglich, aus wirtschaftlichen Gründen im Regelfall aber nicht zweckmäßig. Bevorzugt werden Temperaturen im Bereich von 10 bis 50 °C, insbesondere 15 bis 30 °C. Während der Entgiftung soll der pH-Wert zwischen 8 und 12 liegen, vorzugsweise zwischen 9,5 und 11 ,5 insbesondere zwischen 10 und 11. Der pH-Wert wird zweckmäßigerweise während der Entgiftung innerhalb der bevorzugten Bereiche aufrechterhalten. Die Zugabe der Peroxidverbindungen kann in einer Portion zu Beginn der Entgiftung oder in mehreren Portionen oder kontinuierlich während der Entgiftung erfolgen.

Es ist möglich, die Entgiftungsreaktion auch in Gegenwart von Jodid als Katalysator durchzuführen. Vorzugsweise wird in diesem Fall der Endpunkt der Entgiftung potentiometrisch in Gegenwart von 1 bis 1000 ug Ag⁺/l mittels eines Silber-/Thalamid-Elektrodenpaares indiziert.

Die Vorteile des erfindungsgemäßen Verfahrens bestehen darin, daß zur Entgiftung cyanidischer Lösungen, welche Cyanokomplexe bildende toxische Metalle enthalten, das Äquivalentverhältnis Alkalipercarbonat zu Cyanid gegenüber Wasserstoffperoxid/Cyanid wesentlich erniedrigt werden konnte. Gleichzeitig konnte der Entgiftungsgrad bezüglich der Schwermetalle, wie insbesondere Kupfer, aber auch Nickel verbessert werden; damit können nun auch solche cyanidischen Abwässer durch Zugabe von Cu(II)-verbindungen als Katalysator wirksam und rasch entgiftet werden, wo bisher von der Cu(II)-Zugabe im Hinblick auf einen zu hohen Cu-Restgehalt Abstand genommen wurde. Besonders bedeutsam ist, daß nun auch manganhaltige cyanidische Lösungen in wirtschaftlicher Weise entgiftet werden können. Obgleich Percarbonate neben H₂O₂ und anderen Peroxiden im Zusammenhang mit der Cyanidentgiftung von im wesentlichen schwermetallfreien Lösungen beiläufig in der einleitend gewürdigten US 3,970,554 erwähnt wurden, war bisher nirgends ein Hinweis auf die herausragende Wirkung bei der Entgiftung Schwermetalle enthaltender Abwässer zu finden.

### Vergleichsbeispiel

Entgiftung einer wäßrigen Lösung, enthaltend 100 ppm leicht freisetzbares Cyanid (CN_{WAD}) und 60 ppm Cu unter Verwendung von Wasserstoffperoxid (H₂O₂). Die Lösung wurde hergestellt durch Auflösen von Natriumcyanid und CuSO₄ · 5 H₂O in Wasser; der pH-Wert wurde vor der Entgiftung mit NaOH auf 10 eingestellt. Die Entgiftung erfolgte bei Raumtemperatur. Der Tabelle 1 sind die gewählten Molverhältnisse H₂O₂ : CN_{WAD} sowie die Entgiftungsergebnisse in Abhängigkeit von der Einsatzmenge an Peroxidverbindung, ferner die pH-Werte und die Reaktionszeiten, zu entnehmen. H₂O₂ wurde als 70 gew. -%ige wäßrige Lösung zugegeben. Zur potentiometrischen Endpunktindizierung unter Verwendung eines Silber-/Thalamid-Elektrodenpaares wurde die Entgiftung jeweils in Gegenwart von 0, 1 ml Aktivator CN (Firma Degussa AG) pro l Lösung durchgeführt. Der Cu-Gehalt wurde durch Atomabsorptionsspektren, der Cyanidgehalt photometrisch mittels der Pikrinsäuremethode bestimmt. Unter Verwendung von H₂O₂ ist zur Entgiftung auf einen Restcyanidgehalt von unter 0,5 ppm und Rest-Cu-Gehalt von unter 1 ppm eine H₂O₂-Einsatzmenge von mehr als 6 Mol pro CN-Gruppe erforderlich.

**Tabelle 1**

| Molverhältnis [H₂O₂]:[CH_{WAD}] | Restkonzentration nach Entgiftung | | pH vor --nach der Entgiftung | Reaktionszeit (min) |
|---|---|---|---|---|
| | [CN_{WAD}] (ppm) | [Cu] (ppm) | | |
| 1 : 1 | 37,8 | 47,3 | 10 konst. | 60 |
| 2 : 1 | 18, 1 | 22,6 | 10 konst. | 23 |
| 3 : 1 | 16,64 | 20 | 10 konst. | 14 |
| 4 : 1 | 13, 12 | 15,2 | 10 konst. | 10 |
| 6 : 1 | 4,32 | 15,2 | 10 konst. | 7 |
| 8 : 1 | 0,02 | < 1 ,0 | 10 konst. | 2 |

### Beispiel

Entgiftet wurde eine wäßrige Lösung mit 100 ppm leicht freisetzbarem Cyanid und 60 ppm Cu unter Verwendung von Natriumpercarbonat (NaCO₃ · 1,5 H₂O₂). Die Entgiftung erfolgte unter Konstanthaltung des pH-Wertes auf 10 bei 20 °C. Zur pH-Einstellung und Korrektur wurden HaOH bzw. HCl verwendet. Natriumpercarbonat wurde zu Beginn als Feststoff auf einmal in die auf pH 10 eingestellte Lösung eingetragen. Die Endpunktindizierung und Analysen wurden gemäß Vergleichsbeispiel durchgeführt. Der Tabelle 2 sind die Ergebnisse im Vergleich zu Wasserstoffperoxid zu entnehmen.

**Tabelle 2**

| Peroxidverbindung | Äquivalentverhältnis [Peroxidverbindung] : [CN_{WAD}] | Restkonzentration | | Reaktionszeit (Min.) |
|---|---|---|---|---|
| | | [CN_{WAD}] (ppm) | [Cu] (ppm) | |
| Na₂CO₃ · 1 ,5 H₂O | 3 : 1 *) | 0,39 | 0,5 | 14 |
| H₂O₂ | 3 : 1 **) | 16,64 | 20 | 14 |

| | | | | |
|---|---|---|---|---|
| *) Molverhältnis [Natriumpercarbonat] : [CN_{WAD}] = 2:1 | | | | |
| **) siehe Vergleichsbeispiel | | | | |

Es war nicht vorhersehbar, daß Natriumpercarbonat gegenüber H₂O₂ eine vielfach bessere Wirkung zeigt.

## Patentansprüche

1. Verfahren zum Entgiften von Cyanide und/oder Cyanokomplexe enthaltenden wäßrigen Lösungen, welche auch Feststoffe enthalten können, in Gegenwart von Verbindungen von Schwermetallen aus der Reihe Mn, Co, Ni, Cu, Cd, Zn, insbesondere Cu, durch oxidative Behandlung der Lösungen mit einer Peroxidverbindung, wobei pro Äquivalent Cyanid mindestens ein Äquivalent Peroxidverbindung eingesetzt wird, bei pH-Werten von 8 bis 12 und Temperaturen zwischen dem Gefrierpunkt der Lösungen bis 80 °C,
dadurch gekennzeichnet,
daß man als Peroxidverbindung ein Alkalipercarbonat verwendet, wobei dieses in fester oder in Wasser gelöster oder suspendierter Form der zu entgiftenden Lösung zugesetzt wird.

2. Verfahren nach Anspruch 1,
dadurch gekennzeichnet,
daß man pro Äquivalent Cyanid 2 bis 4 Äquivalente Peroxidverbindung verwendet.

3. Verfahren nach Anspruch 1 oder 2,
dadurch gekennzeichnet
daß man als Alkalipercarbonat Natriumpercarbonat der Formel Na₂ · CO₃ · 1,5 H₂O₂ verwendet, wobei dieses in fester Form in einer oder mehreren Portionen der zu entgiftenden Lösung zugegeben wird.

4. Verfahren nach einem der Ansprüche 1 bis 3,
dadurch gekennzeichnet.
daß man den pH-Wert während der Entgiftungsreaktion zwischen 9,5 und 11 ,5 , insbesondere zwischen 10 und 11 , hält.

5. Verfahren nach einem der Ansprüche 1 bis 4,
dadurch gekennzeichnet.
daß man die Entgiftungsreaktion in Gegenwart von Jodid durchführt und vorzugsweise den Endpunkt der Entgiftung potentiometrisch in Gegenwart von 1 bis 1000 ug Ag⁺/l mittels eines Silber-/Thalamid-Elektrodenpaars indiziert.

6. Verfahren nach einem der Ansprüche 1 bis 5,
dadurch gekennzeichnet,
daß man manganhaltige Cyanide und/oder Cyanokomplexe enthaltende wäßrige Lösungen in Gegenwart von Kupfer als Katalysator entgiftet.
